# EUROPEAN PATENT APPLICATION

(11) **EP 1 713 266 A1**
(43) Date of publication of application: **18.10.2006**
(21) Application number: 05008204.9
(22) Date of filing: 14.04.2005
(51) Int. Cl.: H04N 5/74, F16M 11/42, A47B 97/00

(54) **Device and method for preventing television from toppling down**

(71) Applicant: Coretronic Corporation, Chu-Nan 350, Miao-Li County (TW)
(72) Inventor: Chen, Kuo-Wen, Coretronic Corporation, Chu-Nan 350 Miao-Li County Taiwan (TW)
(74) Representative: TER MEER - STEINMEISTER & PARTNER GbR

(57) **Abstract**

The present invention discloses a device (14) and method thereof for preventing an electronic apparatus (12) from toppling down. The device (14) includes a base (20), a movable supporting element (22), and a sliding-prevention pad (24). The base (20) is positioned at the bottom side (26) of the electronic apparatus (12). The movable supporting element (22) has a contact end and is positioned under the base (20) in a movable way. The sliding-prevention pad (24) is positioned at the contact end of the movable supporting element (22), and it contacts or is moved away from the ground (28) by utilizing the movable supporting element (22). When the electronic apparatus (12) is moved away, the movable supporting element (22) is actuated, so that the movable supporting element (22) is away from the ground (28). When the electronic apparatus (12) is fixed at a current position, the movable supporting element (22) is actuated, so that the movable supporting element (22) contacts the ground (28) to prevent the electronic apparatus (12) from toppling down.

## Description

### BACKGROUND OF THE INVENTION

### 1. Field of the invention

The present invention relates to a device and method thereof for preventing an electronic apparatus from toppling down, especially to a device and method thereof for preventing a vertical projection television from toppling down.

### 2. Description of the prior art

With the high demand of the visual enjoyment, the vertical projection television is developed and popularized. The height of a vertical projection television is usually similar to the height of an adult, and the weight of the vertical projection television is also usually heavier than the weight of an adult. If a family which owns a vertical projection television has a child, the safety issue of the vertical projection television will become even more important.

In general, the height of a vertical projection television is taller than the height of a child, and the weight of the vertical projection television is heavier than the weight of a child. When a child plays in front of the vertical projection television and pulls or climbs on the television, the television may topple down and harm the child.

Therefore, the main objective of the present invention is to provide a device and method thereof for preventing an electronic apparatus from toppling down.

### SUMMARY OF THE INVENTION

The objective of the present invention is to provide a device and the method thereof for preventing an electronic apparatus from toppling down.

The other objective of the present invention is to provide a device and the method thereof for preventing an electronic apparatus from toppling down and for helping the products to pass a safety test, so as to guarantee product safety.

The present invention provides a device for preventing an electronic apparatus from toppling down. The electronic apparatus comprises a housing. The device of the present invention comprises a base, a movable supporting element, and a sliding-prevention pad. The base is positioned on the bottom side of the housing of the electronic apparatus. The movable supporting element has a contact end and is positioned under the base in a movable way. The sliding-prevention pad is positioned at the contact end of the movable supporting element. The sliding-prevention pad can contact or be moved away from the ground by utilizing the movable supporting element. When a user wants to move the electronic apparatus away, the movable supporting element is actuated, so that the contact end of the movable supporting element is away from the ground. When the user wants to fix the electronic apparatus at a current position, the movable supporting element is actuated, so that the contacting end of the movable supporting element contacts the ground to prevent the electronic apparatus from toppling down.

Because the device of the present invention comprises a movable supporting element and a sliding-prevention pad, the present invention can prevent an electronic apparatus from toppling down by a user or an earthquake. Therefore, the device of the present invention used for preventing the electronic apparatus from toppling down improves product safety to protect the user.

The advantage and spirit of the invention may be understood by the following recitations together with the appended drawings.

### BRIEF DESCRIPTION OF THE APPENDED DRAWINGS

FIG. 1 is a front view of a device positioned under an electronic apparatus for preventing the electronic apparatus from toppling down according to the present invention.
FIG. 2 is a side view of the device positioned under the electronic apparatus in FIG. 1.
FIG. 3 is a schematic diagram of a sliding-prevention pad of the device shown in FIG. 1 contacting the ground.
FIG. 4 is a schematic diagram of the sliding-prevention pad of the device shown in FIG. 1 away from the ground.
FIG. 5 is a schematic diagram of the electronic apparatus, which has the device, placed on an incline.
FIG. 6 is a flowchart of a method for preventing an electronic apparatus from toppling down, using a device shown in FIG. 1.

### DETAILED DESCRIPTION OF THE INVENTION

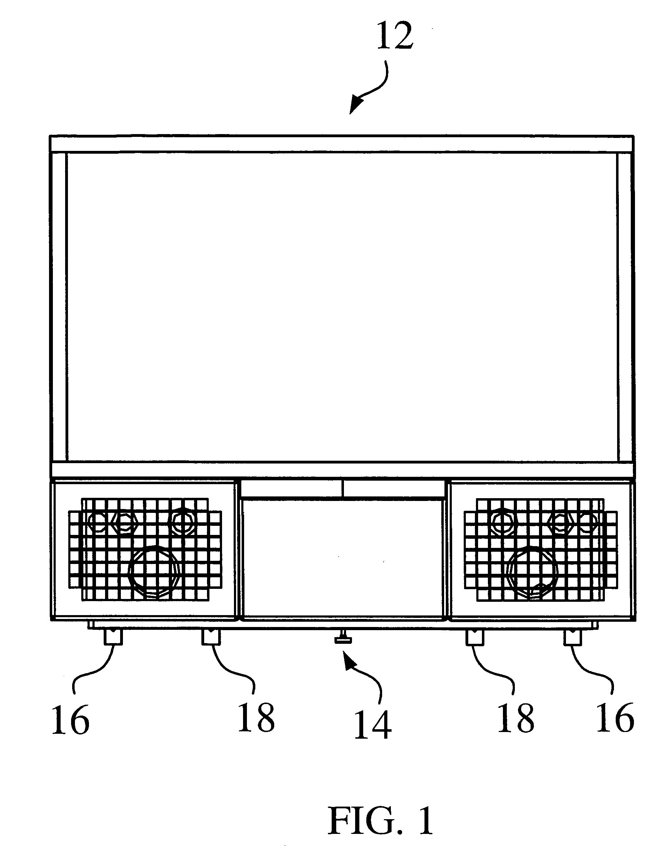

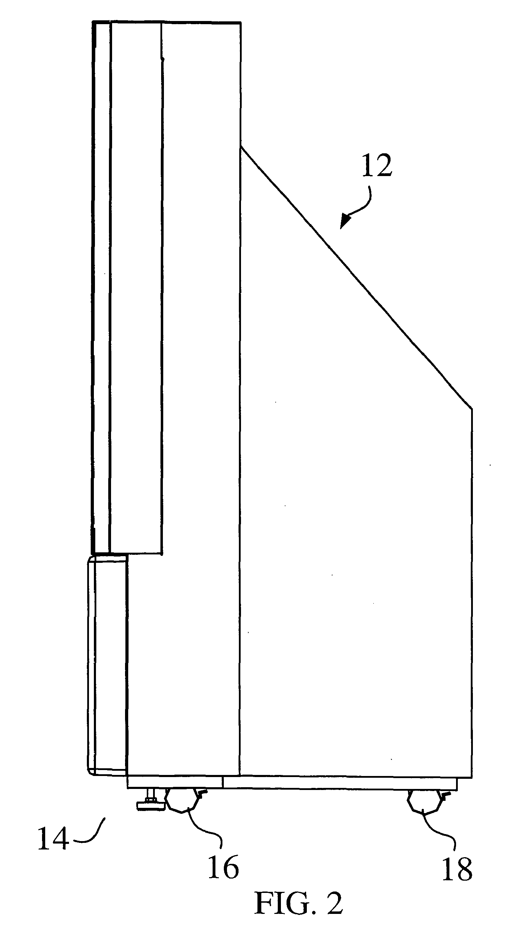

Referring to FIG. 1 and FIG. 2, FIG. 1 is a front view of a device 14 positioned under an electronic apparatus 12 for preventing the electronic apparatus 12 from toppling down, according to the present invention. FIG. 2 is a side view of the device 14 positioned under the electronic apparatus 12 in FIG. 1. In an embodiment, the electronic apparatus 12 is a vertical projection television. The electronic apparatus 12 comprises two sets of rotatable wheels, which are parallel to each other and positioned on the bottom side of the housing of the electronic apparatus 12 for a user to move the electronic apparatus 12. The above two sets of rotatable wheels include a set of rotatable front wheels 16 and a set of rotatable rear wheels 18. In the embodiment shown in FIG. 1, the electronic apparatus 12 comprises two rotatable front wheels 16 and two rotatable rear wheels 18. Because FIG. 2 is a side view of the electronic apparatus 12, only one rotatable front wheel 16 and one rotatable rear wheel 18 are shown in FIG. 2.

As shown in FIG. 2, the set of rotatable front wheels 16 is positioned at a predetermined distance from the front face of the electronic apparatus 12 instead of being positioned directly under the front face of the electronic apparatus 12. The device 14 is positioned between the front face of the electronic apparatus 12 and the set of rotatable front wheels 16.

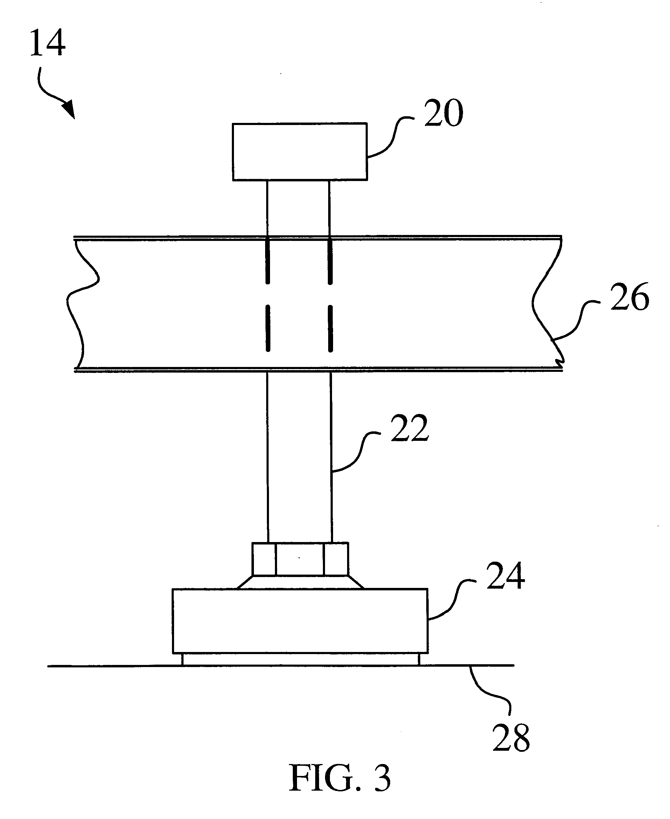

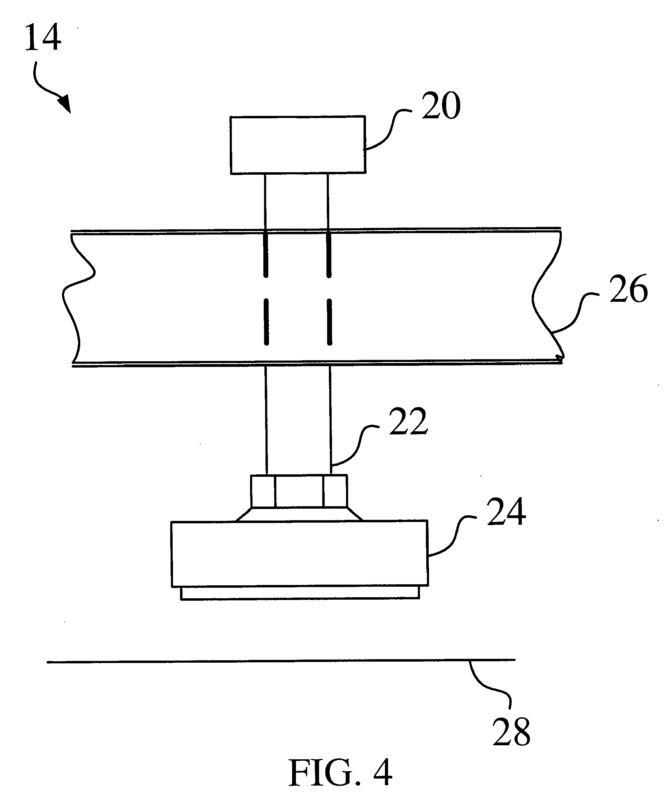

Referring to FIG. 3 and FIG. 4, FIG. 3 is a schematic diagram of a sliding-prevention pad 24 of the device 14 shown in FIG. 1 contacting the ground 28. FIG. 4 is a schematic diagram of the sliding-prevention pad 24 of the device 14 shown in FIG. 1 away from the ground 28. The device 14 comprises a base 20, a movable supporting element 22, and a sliding-prevention pad 24. The base 20 is positioned on the bottom side 26 of the housing of the electronic apparatus 12 shown in FIG. 1. The movable supporting element 22 is positioned under the base 20 in a movable way. The sliding-prevention pad 24 is positioned at the contact end of the movable supporting element 22, and the sliding-prevention pad 24 can contact or be moved away from the ground 28 by utilizing the movable supporting element 22. The material of the sliding-prevention pad 24 is a sliding-prevention plastic, so as to prevent the electronic apparatus 12 from sliding or toppling down. When a user wants to move the electronic apparatus 12 away, the movable supporting element 22 is actuated, so that the sliding-prevention pad 24 of the movable supporting element 22 is away from the ground. When the user wants to fix the electronic apparatus 12 at a current position, the movable supporting element 22 is actuated, so that the sliding-prevention pad 24 of the movable supporting element 22 contacts the ground to prevent the electronic apparatus 12 from toppling down.

In the embodiment shown in FIG. 3 and FIG. 4, the movable supporting element 22 is a supporting staff. There are mutually engaged screw threads on both the supporting staff and the base 20 for enabling the supporting staff to connect to the base 20 in a rotatable way and for enabling the sliding-prevention pad 24 to contact or to be moved away from the ground 28. When the electronic apparatus 12 is placed on the ground 28, the device 14 utilizes the supporting staff to enable the sliding-prevention pad 24 to contact the ground 28, as shown in FIG. 3. When the user wants to move the electronic apparatus 12 away, the user can rotate the movable supporting element 22 to enable the sliding-prevention pad 24 to be moved away from the ground 28, as shown in FIG. 4.

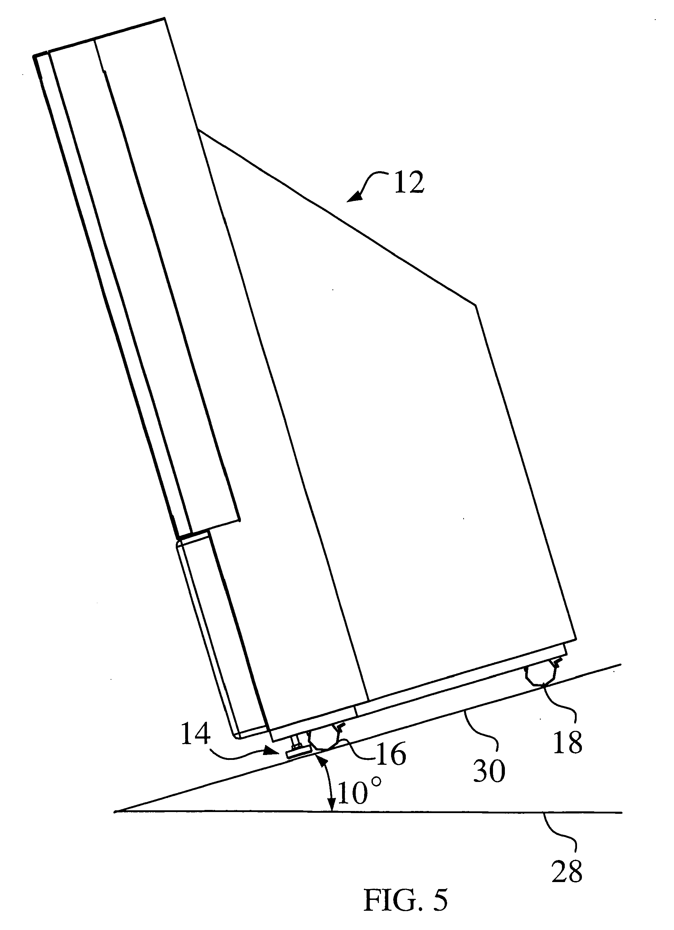

Referring to FIG. 5, FIG. 5 is a schematic diagram of the electronic apparatus 12, which has the device 14, placed on an incline 30. The electronic apparatus 12 shown in FIG. 5 is placed on an incline 30, which tilts with 10 degrees from the ground 28. According to the device 14 of the present invention, when the electronic apparatus 12 is placed on the incline 30 for a safety test, the device 14 can prevent the electronic apparatus 12 from toppling down, so as to pass the safety test. Moreover, when the electronic apparatus 12 is placed on the incline 30, and a 10 kg pulling force is added to the middle of the top of the front face of the electronic apparatus 12, the device 14 can still prevent the electronic apparatus 12 from toppling down.

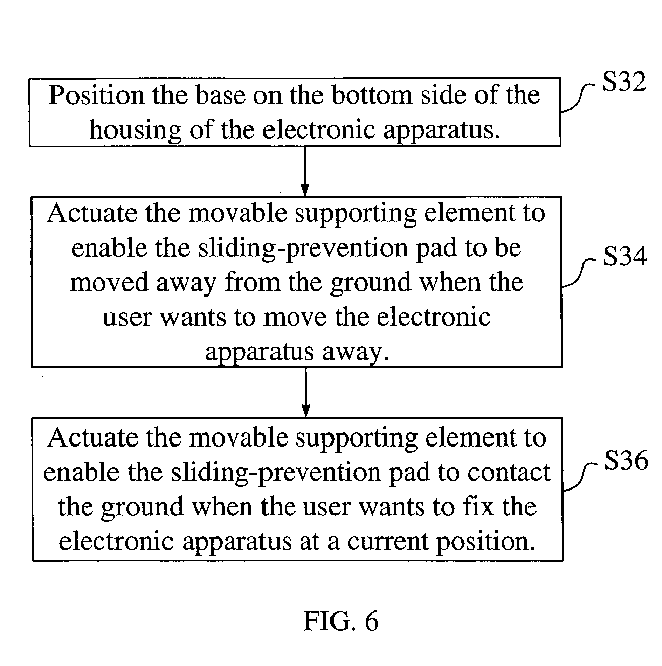

Referring to FIG. 6, FIG. 6 is a flowchart of a method for preventing an electronic apparatus 12 from toppling down, using a device 14 shown in FIG. 1. The present invention provides a method for preventing an electronic apparatus from toppling down by using a device. The following will take the device 14 shown in FIG. 1 and FIG. 3 to describe the method of the present invention for preventing the electronic apparatus 12 from toppling down. According to an embodiment of the present invention, the electronic apparatus comprises a housing, and the device 14 comprises a base 20, a movable supporting element 22, and a sliding-prevention pad 24. The movable supporting element 22 has a contact end and is used for connecting to the base 20. The sliding-prevention pad 24 is positioned at the contact end of the movable supporting element 22. There are mutually engaged screw threads on both the movable supporting element 22 and the base 20 for the user to rotate the sliding-prevention pad 24, so the sliding-prevention pad 24 can contact or be moved away from the ground 28 by utilizing the movable supporting element 22. As shown in FIG. 6, the method of the present invention for preventing the electronic apparatus 12 from toppling down by the device 14 comprises the following steps:
Step S32: Position the base 20 on the bottom side 26 of the housing of the electronic apparatus 12;
Step S34: Actuate the movable supporting element 22 to enable the sliding-prevention pad 24 to be moved away from the ground 28 when the user wants to move the electronic apparatus 12 away;
Step S36: Actuate the movable supporting element 22 to enable the sliding-prevention pad 24 to contact the ground 28 when the user wants to fix the electronic apparatus 12 at a current position.

When the device 14 is positioned on the electronic apparatus 12 by the base 20, the device 14 is positioned between the front face of the electronic apparatus 12 and the set of rotatable front wheels 16. Furthermore, when the electronic apparatus 12 is placed on the ground, the sliding-prevention pad 24 is positioned at the contact end of the movable supporting element 22, and the sliding-prevention pad 24 can contact or be moved away from the ground by utilizing the supporting staff of the device 14. Because the material of the sliding-prevention pad 24 is a sliding-prevention plastic, the sliding-prevention pad 24 can prevent the electronic apparatus 12 from toppling down. When the user wants to move the electronic apparatus 12 away, the user can rotate the sliding-prevention pad 24 by actuating the movable supporting element 22, so that the contact end of the movable supporting element 22 is moved away from the ground 28. When the user wants to fix the electronic apparatus 12 at a current position, the user can rotate the sliding-prevention pad 24 by actuating the movable supporting element 22, so that the contacting end of the movable supporting element 22 contacts the ground 28.

In the method of the present invention for preventing an electronic apparatus from toppling down by using a device, according to the movable supporting element 22 and the sliding-prevention pad 24 of the device, there is an upward action force generated by the movable supporting element 22. Accordingly, the upward acting force reduces the gravitational force of the weight of the electronic apparatus 12 and the downward pulling force by the user. The device 14 of the present invention can prevent an electronic apparatus from toppling down by a user, an earthquake, or a naughty child. Therefore, the device of the present invention used for preventing the electronic apparatus from toppling down improves product safety to protect the user.

With the example and explanations above, the features and spirits of the invention will be hopefully well described. Those skilled in the art will readily observe that numerous modifications and alterations of the device may be made while retaining the teaching of the invention. Accordingly, the above disclosure should be construed as limited only by the metes and bounds of the appended claims.

## Claims

1. A device for preventing an electronic apparatus from toppling down, the electronic apparatus comprising a housing and a set of rotatable front wheels positioned at a predetermined distance from a front face of the electronic apparatus, the device comprising:
a base being positioned at a bottom side of the housing of the electronic apparatus; and
a movable supporting element having a contact end, the movable supporting element being positioned between the front face of the electronic apparatus and the set of rotatable front wheels, and being positioned under the base in a movable way;
wherein when the electronic apparatus is to be moved away, the movable supporting element is actuated, so that the contact end of the movable supporting element is away from the ground, and when the electronic apparatus is to be fixed at a current position, the movable supporting element is actuated, so that the contacting end of the movable supporting element contacts the ground to prevent the electronic apparatus from toppling down.

2. The device of claim 1, wherein the electronic apparatus further comprises a set of rotatable rear wheels parallel to the set of rotatable front wheels, and the two sets of rotatable wheels are positioned at the bottom side of the housing of the electronic apparatus for moving the electronic apparatus.

3. The device of claim 1, wherein the device further comprises a sliding-prevention pad positioned at the contact end of the movable supporting element, and the sliding-prevention pad contacts or is moved away from the ground by utilizing the movable supporting element.

4. The device of claim 3, wherein the material of the sliding-prevention pad is a sliding-prevention plastic.

5. The device of claim 1, wherein the electronic apparatus is a television.

6. The device of claim 1, wherein the movable supporting element is a supporting staff, and there are mutually engaged screw threads on both the supporting staff and the base for enabling the supporting staff to be connected to the base in a rotatable way and for enabling the sliding-prevention pad to contact or to be moved away from the ground.

7. The device of claim 1, wherein the movable supporting element is a supporting staff connected to the base in a swinging way and enabling the sliding-prevention pad to contact or to be moved away from the ground.

8. A method for preventing an electronic apparatus from toppling down by a device, the electronic apparatus comprising a housing, the device comprising a base, a movable supporting element, and a sliding-prevention pad, the movable supporting element having a contact end and being used for being connected to the base, the sliding-prevention pad being positioned at the contact end of the movable supporting element for contacting or being moved away from the ground by utilizing the movable supporting element, the method comprising the following steps:
(A) positioning the base at a bottom side of the housing of the electronic apparatus;
(B) actuating the movable supporting element to enable the sliding-prevention pad away from the ground when the electronic apparatus is to be moved; and
(C) actuating the movable supporting element to enable the sliding-prevention pad to contact the ground when the electronic apparatus is to be fixed at a current position.

9. The method of claim 8, wherein the electronic apparatus is a television.

10. The method of claim 8, wherein the electronic apparatus comprises two sets of rotatable wheels parallel to each other and positioned at the bottom side of the housing of the electronic apparatus for moving the electronic apparatus.

11. The method of claim 10, wherein the electronic apparatus comprises a set of rotatable front wheels and a set of rotatable rear wheels, and the set of rotatable front wheels are positioned at a predetermined distance from a front face of the electronic apparatus instead of being positioned under the front face of the electronic apparatus, and the device is positioned between the front face of the electronic apparatus and the set of rotatable front wheels.

12. The method of claim 8, wherein the movable supporting element is a supporting staff, and there are mutually engaged screw threads on both the supporting staff and the base for enabling the supporting staff to be connected to the base in a rotatable way and for enabling the sliding-prevention pad to contact or to be moved away from the ground.

13. The method of claim 8, wherein the movable supporting element is a supporting staff connected to the base in a swinging way and enabling the sliding-prevention pad to contact or to be moved away from the ground.

14. The method of claim 8, wherein the material of the sliding-prevention pad is a sliding-prevention plastic for preventing the electronic apparatus from sliding or toppling down.
